# EUROPÄISCHE PATENTANMELDUNG

(11) **EP 4 005 713 A2**
(43) Veröffentlichungstag der Anmeldung: **01.06.2022**
(21) Anmeldenummer: 21206884.5
(22) Anmeldetag: 08.11.2021
(51) Int. Cl.: B23B 51/04

(54) **ZERSPANUNGSWERKZEUG ZUM BEARBEITEN VON KUNSTSTOFF**

(30) Priorität: 18.11.2020 DE 102020130445
(71) Anmelder: Gühring KG, 72458 Albstadt (DE)
(72) Erfinder: Rebholz, Felix, 72510 Stetten-Frohnstetten (DE)
(74) Vertreter: Gleim, Christian Ragnar

(57) **Zusammenfassung**

Zerspanungswerkzeug (1) zum Bearbeiten von Kunststoff, umfassend einen Werkzeugschaft (2) zur Anordnung in einer Werkzeugaufnahme, und einen sich an den Werkzeugschaft (2) anschließenden Hohlzylinder (3), umfassend wenigstens ein stirnseitig entnehmbar angeordnetes Schneidelement (5).

## Beschreibung

Die Erfindung betrifft ein Zerspanungswerkzeug zum Bearbeiten von Kunststoff gemäß dem unabhängigen Anspruch.

Die Erfindung liegt im technischen Gebiet von Werkzeugen für spanende Fertigungsverfahren, insbesondere Bohrern zum Fertigen von Bohrungen in Kunststoff, wie kohlenfaserverstärktem Kunststoff.

Es ist aus dem Stand der Technik bekannt, Bohrer mit unterschiedlichen Durchmessern zum Fertigen unterschiedlich großer Bohrungen einzusetzen. Die am häufigsten verwendeten Bohrer sind Spiralbohrer bzw. Wendelbohrer oder Wendelnutenbohrer.

Ferner sind US 5 451 128 A sowie US 4 500 234 A bekannt.

Neben den gewöhnlichen Spiralbohrern gibt es noch Bohrer mit Schneidelementen, wie Wendeschneidplatten, die zum Beispiel für Bohrungen mit großen Durchmessern eingesetzt werden. Hier ergibt sich das Problem, dass die Bohrungen teilweise in mehreren Schritten gefertigt werden müssen, weil üblicherweise ein Vorbohren erforderlich ist. Durch diesen zusätzlichen Prozessschritt verlängert sich die Gesamtprozesszeit bei der Fertigung von Bohrungen. So kann sich ein Bedarf dahingehend ergeben, größere Bohrdurchmesser mit nur einem Prozessschritt erzeugen zu können ohne dabei die Qualität der Oberfläche zu verschlechtern.

Das Fertigen von Bohrungen in Kunststoff, insbesondere in kohlefaserverstärktem Kunststoff, stellt eine wichtige Aufgabe bei neuen Entwicklungen dar, insbesondere im Straßen- oder Luftverkehr bzw. im Maschinen- und Anlagenbau, wo ressourcenschonende Anforderungen an Design und Konstruktion gestellt werden.

Dabei liegen die zu fertigenden Bohrdurchmesser häufig in einem Bereich von 10-60 mm. Beim Bohren von derart großen Löchern in kohlefaserverstärktem Kunststoff liegt das besondere Augenmerk vor allem darauf, Delaminationen und Faserüberstände am Bohrungsaustritt zu vermeiden und die gesamten Bohrungstoleranzen in Bezug auf Durchmesser, Form und Oberfläche prozesssicher einzuhalten.

Die Erfindung hat die Aufgabe ein Zerspanungswerkzeug bereitzustellen, welches die Nachteile im Stand der Technik überwindet und ein Erzeugen von größeren Bohrungen in guter Qualität bei einer minimalen Anzahl von Prozessschritten zu ermöglichen.

Die Aufgabe wird durch ein Zerspanungswerkzeug zum Bearbeiten von Kunststoff mit den Merkmalen des unabhängigen Anspruchs 1 gelöst. Vorteilhafte Ausführungsformen bilden den Gegenstand der zugehörigen Unteransprüche.

Die Erfindung umfasst ein Zerspanungswerkzeug zum Bearbeiten von Kunststoff umfassend einen Werkzeugschaft zur Anordnung in einer Werkzeugaufnahme und einen sich an den Werkzeugschaft anschließenden Hohlzylinder umfassend wenigstens ein stirnseitig entnehmbar angeordnetes Schneidelement. Zur Herstellung einer Bohrung wird das Zerspanungswerkzeug in das Bohrfutter einer Bohrmaschine eingesetzt, welche üblicherweise eine Drehbewegung um ihre Achse ausführt und dabei das Zerspanungswerkzeug in das zu bearbeitende Werkstück bewegt.

Ein vorteilhafter Aspekt sieht vor, dass der Hohlzylinder stirnseitig wenigstens eine Öffnung zur Aufnahme des Schneidelementes umfasst. Dadurch kann das Schneidelement einfach ausgetauscht werden, wenn es abgenutzt ist. Dies ermöglicht die Vermeidung von Delaminierung und damit das Fertigen von Bohrungen höchster Oberflächengüte. Das abgenutzte Schneidelement kann auch einfach erneut angeschliffen und wiedereingesetzt werden. Dies ermöglicht eine Mehrfachnutzung der Schneidelemente und somit einen nachhaltigen Umgang mit den Materialen, die für die Schneidelemente verwendet werden.

Nach einem bevorzugten Aspekt umfasst das Schneidelement einen Schaft mit einer Länge I₁ zur Anordnung in der Öffnung und eine Schneidplatte.

Besonders vorteilhaft ist, wenn die Schneidplatte ein Schneidkantenprofil mit einer Spitze umfasst. Dies stellt einen verbesserten Eintritt in das Material und Ausgang aus dem Material heraus sicher.

Es hat sich als vorteilhaft herausgestellt, wenn die Schneidplatte in einer Neigung gegenüber dem Schaft angeordnet ist. So kann eine präzise Bohrung und ein gutes Ableiten der abgehobenen Späne in einer verringerten Prozesszeit gewährleistet werden, was insgesamt zu einer Effizienzsteigerung der Materialbearbeitung führt.

Vorteilhafterweise umfasst der Hohlzylinder stirnseitig einen Kühlmittelauslass. Dies ermöglicht eine optimale Kühlung im Bereich der bearbeiteten Stelle und damit Erhöhung der Bearbeitungsqualität, bei gleichzeitig geringem Kühlmittelverbrauch.

Nach einem vorteilhaften Aspekt umfasst der Schaft einen kreisförmigen Querschnitt mit einer Abflachung. Dies ermöglicht ein einfaches Entnehmen und Einsetzen des Schneidelementes in das Zerspanungswerkzeug. Dadurch kann das entsprechende Schneidelement fest in einer bestimmten Position gehalten bzw. verklemmt werden.

Nach einem bevorzugten Aspekt ist zwischen der Öffnung und dem Schaft im Bereich der Abflachung des kreisförmigen Querschnittes ein sich zwischen dem Kühlmittelauslass und einem Ventil erstreckender Kühlmittelkanal ausgebildet. Dadurch kann innerhalb des Kühlmittelkanals das Kühlmittel strömen und durch den Kühlmittelaustritt zur Bearbeitungsstelle geführt werden. So tritt das Kühlmittel direkt an der Schneidkante aus.

Nach einem vorteilhaften Aspekt umfasst die Schneidplatte einen Querschnitt, der größer ist als der Querschnitt des Schaftes. Dies ermöglicht ein stirnseitiges Aufliegen der Schneidplatte auf dem Hohlzylinder, was sicheres Eindringen der Schneidplatte in das Material ermöglicht. Dadurch können gut Bohrungen mit größeren Durmessern in einem einzigen Prozessschritt gefertigt werden, weil der Holzylinder innerhalb der Bohrung liegt.

Besonders vorteilhaft ist, wenn der Hohlzylinder stirnseitig eine um jedes Schneidelement angeordnete Aussparung umfasst. Dadurch können die abgetragenen Späne unmittelbar abgeführt werden.

Im Folgenden wird die Erfindung anhand einer Zeichnung näher erläutert.

Es zeigen:
- Fig. 1: dreidimensionale Darstellung eines erfindungsgemäßen Zerspanungswerkzeugs in der Art eines Bohrwerkzeugs;
- Fig. 2: eine Draufsicht auf das Bohrwerkzeug aus Fig. 1 von oben mit Schneidelementen und an die Schneidelemente angrenzende Aussparungen;
- Fig. 3: eine Detailansicht des Bohrwerkzeugs aus Fig. 1 mit Schneidelementen und Kühlmittelauslass;
- Fig. 4: eine Seitenansicht des oberen Abschnittes eines Schneidelementes mit einer Schneidplatte mit Schneidkantenprofil und einer Spitze; und
- Fig. 5: eine Seitenansicht eines Schneidelementes mit Schaft der Länge I₁ und einer Schneidplatte mit Schneidkantenprofil und einer Spitze.

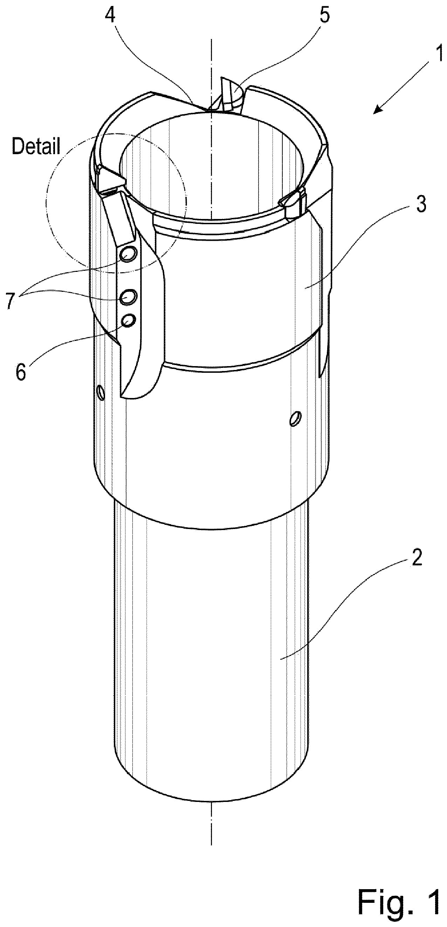

**In** **Fig. 1** ist ein erfindungsgemäßes Bohrwerkzeug 1 mit einem Werkzeugschaft 2 und einem Hohlzylinder 3 (Bohrkopf, Bohrkrone) dargestellt, dabei ist der Durchmesser des Werkzugschaftes 2 kleiner als der Durchmesser des Hohlzylinders 3. Im gezeigten Beispiel sind drei Schneidelemente 5 stirnseitig am Hohlzylinder 3 angeordnet. Direkt an das Schneidelement 5 angrenzend ist die Aussparung 4 angeordnet. Es ergibt sich so ein wellenartiges Profil der Stirnseite des Hohlzylinders 3, mit den Schneidelementen 5 als Erhebung und den entsprechenden Aussparungen 4 als Vertiefung. Am Außenumfang des Hohlzylinders 3 sind Aussparungen mit zwei Bohrungen 7 erkennbar, durch welche die Schneidelemente 5 im Hohlzylinder 3 fixiert werden. Dazu werden durch die Bohrungen 7 Schrauben eingedreht und damit das Schneidelement 5 am Schaft im Hohlzylinder 3 befestigt. Ebenfalls an der Seitenfläche der Aussparung am Außenumfang des Hohlzylinders 3 befindet sich ein Ventil 6. Über das Ventil 6 kann Kühlmittel zum Kühlmittelauslass geleitet werden.

Ein in Fig. 1 dargestelltes erfindungsgemäßes Bohrwerkzeug 1 kann mit dem Werkzeugschaft 2 im Bohrfutter einer Bohrmaschine befestigt werden. Mit einer solchen Anordnung kann eine Geschwindigkeit von 446 m/min bei einer Spindeldrehzahl von 3500 U/min erreicht werden. Die Vorschubgeschwindigkeit der Bohrmaschine mit einem erfindungsgemäßen Bohrwerkzeug 1 beträgt 250 mm/min, damit können Prozesszeiten von 5,2 Sekunden erreicht werden. Mit einem erfindungsgemäßen Bohrwerkzeug werden Bohrdurchmesser in einem Bereich von 10 - 60 mm, vorzugsweise im Bereich von 20 - 40 mm gefertigt. Dabei dringt der Bohrer bis zu einer Tiefe von 21,5 mm in das zu bearbeitende Werkstück ein.

Wie aus Fig. 1 ersichtlich, weist der Werkzeugschaft 2 einen kleineren Durchmesser als der Hohlzylinder 3 auf. An der Stirnseite des Hohlzylinders 3 bildet eine gegenüber dem Außendurchmesser des Hohlzylinders 3 nach innen versetzte Materialerhöhung, welche die an die Schneidelemente 5 angrenzenden Aussparungen 4 bildet, einen Absatz am Hohlzylinder 3.

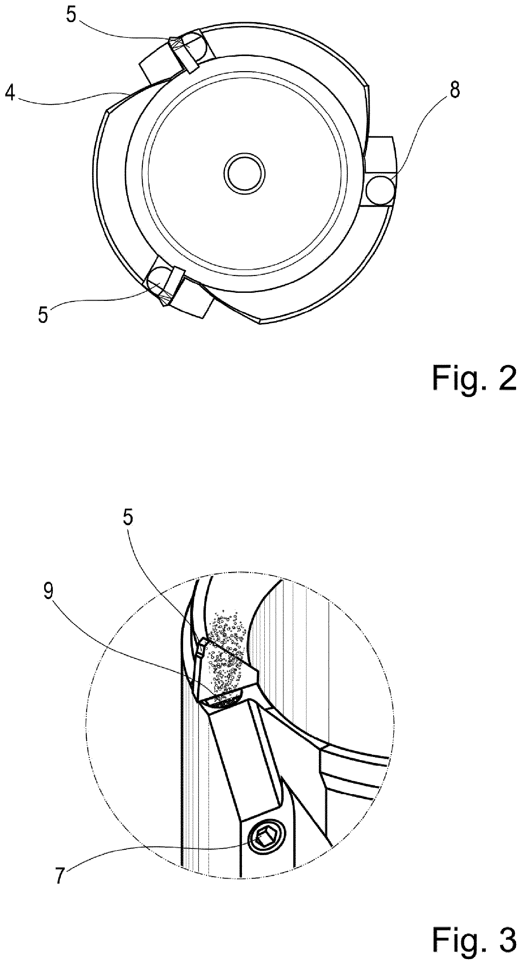

**In** **Fig. 2** ist ein erfindungsgemäßes Bohrwerkzeug 1 in einer Draufsicht von oben dargestellt. Im gezeigten Beispiel sind zwei Schneidelemente 5 stirnseitig am Hohlzylinder 3 angeordnet. In einer dritten Öffnung 8 ist im gezeigten Beispiel kein Schneidelement 5 angeordnet. Direkt an das Schneidelement 5 bzw. die entsprechende Öffnung 8, in die das Schneidelement 5 eingesetzt werden kann, angrenzend ist die Aussparung 4 angeordnet. Es ergibt sich so ein wellenartiges Profil der Stirnseite des Hohlzylinders 3, mit den Schneidelementen 5 als Erhebung und den entsprechenden Aussparungen 4 als Vertiefung. Entsprechend des Anwendungsfalls können in die Öffnung 8 Schneidelemente 5 eingesetzt werden. Ist ein Schneidelement nach einer gewissen Anzahl Bearbeitungszyklen abgenutzt, kann es einfach entnommen und erneut angeschliffen werden.

**In** **Fig. 3** ist eine Detailansicht des Hohlzylinders 3 mit Schneidelementen 5 und Kühlmittelauslass eines erfindungsgemäßen Bohrwerkzeuges 1 dargestellt. Direkt neben dem Schneidelement 5 befindet sich ein Kühlmittelauslass 9, aus dem Kühlmittel strömen kann.

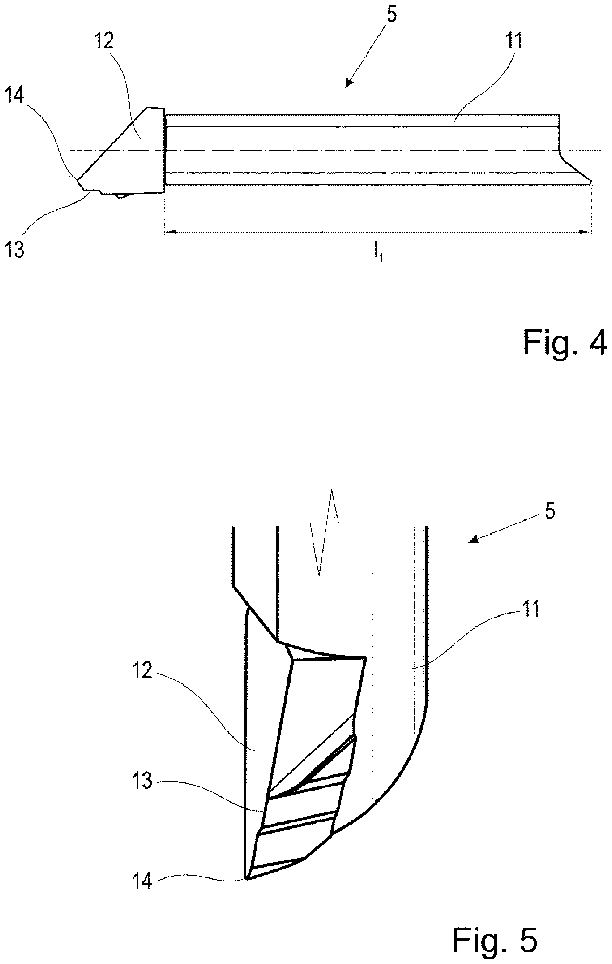

**Fig. 4** ist eine Seitenansicht eines Schneidelementes 5 mit Schaft 11 der Länge I₁ und einer Schneidplatte 12 mit Schneidkantenprofil 13 und einer Spitze 14 dargestellt. Die Länge I₁ ist so gewählt, dass der Schaft 11 vollständig in der Öffnung 8 eingebracht werden kann und die Schneidplatte 12 auf dem Hohlzylinder 3 aufliegt. Aus Fig. 4 ist ersichtlich, dass der Schaft 11 an dem der Schneidplatte 12 gegenüberliegenden Ende ein Profil aufweist, dieses Profil dient der gerichteten Anordnung des Schneidelementes 5 in der Öffnung 8. Beispielsweise kann das Schneidelement 5 aus polykristallinem Diamant gefertigt sein.

**In** **Fig. 5** zeigt Seitenansicht des oberen Abschnittes eines Schneidelementes 5 mit einer Schneidplatte 12 mit Schneidkantenprofil 13 und einer Spitze 14. Die Spitze 14 bildet den höchsten Punkt des Schneidkantenprofils 13 und dringt damit zuerst in das zu bearbeitende Werkstück ein. Die Schneidplatte 12 ist mit dem Schaft 11 des Schneidelementes verbunden. Die Verbindung zwischen Schaft 11 und Schneidplatte 12 kann bspw. eine Löt- oder Klebeverbindung sein. In dem gezeigten Beispiel ist das Schneidelement 5 zweiteilig aus einer Schneidplatte 12 und dem Schaft 11 ausgeführt. Das Schneidkantenprofil kann je nach Anwendungsfall unterschiedlich ausgeführt sein.

## Patentansprüche

1. Zerspanungswerkzeug (1) zum Bearbeiten von Kunststoff umfassend einen Werkzeugschaft (2) zur Anordnung in einer Werkzeugaufnahme und einen sich an den Werkzeugschaft (2) anschließenden Hohlzylinder (3) umfassend wenigstens ein stirnseitig entnehmbar angeordnetes Schneidelement (5).

2. Zerspanungswerkzeug (1) nach Anspruch 1, wobei der Hohlzylinder (3) stirnseitig wenigstens eine Öffnung (8) zur Aufnahme des Schneidelementes (5) umfasst.

3. Zerspanungswerkzeug (1) nach einem der vorhergehenden Ansprüche, wobei das Schneidelement (5) einen Schaft (11) mit einer Länge I₁ zur Anordnung in der Öffnung (8) und eine Schneidplatte (12) umfasst.

4. Zerspanungswerkzeug (1) nach Anspruch 3, wobei die Schneidplatte (12) ein Schneidkantenprofil (13) mit einer Spitze (14) umfasst.

5. Zerspanungswerkzeug (1) nach einem der vorhergehenden Ansprüche, wobei die Schneidplatte (12) in einer Neigung gegenüber dem Schaft (11) angeordnet ist.

6. Zerspanungswerkzeug (1) nach einem der vorhergehenden Ansprüche, wobei der Hohlzylinder (3) stirnseitig einen Kühlmittelauslass (9) umfasst.

7. Zerspanungswerkzeug (1) nach einem der vorhergehenden Ansprüche, wobei der Schaft (11) einen kreisförmigen Querschnitt mit einer Abflachung umfasst.

8. Zerspanungswerkzeug (1) nach einem der vorhergehenden Ansprüche, wobei zwischen der Öffnung (8) und dem Schaft (11) im Bereich der Abflachung des kreisförmigen Querschnittes ein sich zwischen dem Kühlmittelauslass (9) und einem Ventil (6) erstreckender Kühlmittelkanal ausgebildet ist.

9. Zerspanungswerkzeug (1) nach einem der vorhergehenden Ansprüche, wobei die Schneidplatte (12) einen Querschnitt umfasst, der größer ist als der Querschnitt des Schaftes (11).

10. Zerspanungswerkzeug (1) nach einem der vorhergehenden Ansprüche, wobei der Hohlzylinder (3) stirnseitig eine um jedes Schneidelement (5) angeordnete Aussparung (4) umfasst.

11. Zerspanungswerkzeug (1) nach einem der vorhergehenden Ansprüche, wobei der Hohlzylinder (3) außenumfänglich, wenigstens eine Bohrung (7) umfasst, durch welche der Schaft (11) des Schneidelementes (5) in der Öffnung (8) mittels einer Schraube fixierbar ist.
